# FASCICULE DE BREVET EUROPEEN

(11) **EP 3 815 352 B1**
(45) Date de publication et mention de la délivrance du brevet: **07.12.2022**
(21) Numéro de dépôt: 19748859.6
(22) Date de dépôt: 26.06.2019
(51) Int. Cl.: H04N 5/33, G01J 5/06, G01J 5/061, G01J 5/04, G01J 5/59

(54) **DISPOSITIF D'IMAGERIE INFRAROUGE**
INFRAROT-BILDGEBUNGSVORRICHTUNG
INFRARED IMAGING DEVICE

(30) Priorité: 28.06.2018 FR 1855861
(43) Date de publication de la demande: 05.05.2021
(73) Titulaire: SAFRAN ELECTRONICS & DEFENSE, 92100 Boulogne Billancourt (FR)
(72) Inventeur: DAVENEL, Arnaud, 92100 BOULOGNE - BILLANCOURT (FR); RUOCCO-ANGARI, Bernard, 92100 BOULOGNE - BILLANCOURT (FR)
(74) Mandataire: Regimbeau
(86) Numéro de dépôt international: PCT/FR2019/051579
(87) Numéro de publication internationale: WO 2020/002837

(56) Documents cités:
- WO-A2-2014/170670
- CN-A- 106 706 132
- CN-A- 107 883 945
- US-B1- 6 410 916

## Description

### DOMAINE DE L'INVENTION

La présente invention concerne un dispositif d'imagerie infrarouge.

### ETAT DE LA TECHNIQUE

Un problème connu est celui des reflets solaires dans des images produites par des dispositifs d'imagerie destinés à être utilisés en extérieur.

Des dispositifs d'image sont par exemple décrits dans les documents CN 107883945 A, WO 2014/170670, et CN 106 706 132 A.

Pour minimiser l'effet de tels reflets solaires, il est connu d'inclure dans un dispositif d'imagerie un polariseur linéaire en amont d'un détecteur. Un tel polariseur linéaire peut en effet éliminer, dans un signal optique reçu par le dispositif, une première composante porteuse de reflets solaires et laisser passer une deuxième composante non porteuse de reflets solaires, de sorte que cette deuxième composante soit ensuite reçue par le détecteur.

Bien entendu, la direction de polarisation de la première composante est variable. Ainsi, pour éliminer des reflets solaires à coup sûr en toute situation, le polariseur linéaire est configuré pour polariser le signal optique reçu par le dispositif suivant une direction de polarisation variable, avant que le signal optique n'atteigne le détecteur infrarouge.

Par ailleurs, il existe un problème additionnel qui se pose dans un dispositif d'imagerie infrarouge, dont le détecteur est sensible à des longueurs d'onde infrarouge : le détecteur infrarouge est susceptible de recevoir des signaux parasites rayonnés par des parties internes du dispositif lui-même, fortement émissives dans les longueurs d'ondes auxquelles le détecteur infrarouge est sensible. Ceci dégrade le rapport signal sur bruit au niveau du détecteur.

Pour résoudre ce problème additionnel, il est connu de placer le détecteur infrarouge à l'intérieur d'un cryostat. Un tel cryostat maintient l'environnement du détecteur à basse température, typiquement à 80 Kelvins, ce qui a pour effet d'atténuer la propagation de signaux parasites à l'extérieur du champ de vue du détecteur (ce champ de vue ayant un angle solide limité).

Toutefois, le cryostat ne permet pas d'éliminer totalement les signaux parasites, car ceux-ci peuvent encore se propager dans le champ de vue du détecteur. Ces signaux parasitent peuvent donc encore se réfléchir sur une face aval du polariseur linéaire en regard du détecteur, puis atteindre le détecteur en se propageant dans le champ de vue du détecteur lequel non protégé.

Il pourrait ainsi être envisagé de placer le polariseur linéaire à direction de polarisation variable à l'intérieur du cryostat, afin de faire en sorte que les signaux parasites réfléchis soient également « froids ».

Toutefois, ceci demanderait d'augmenter les dimensions du cryostat, ce qui augmentait le coût du dispositif d'imagerie infrarouge.

Par ailleurs, l'inclusion d'un tel polariseur serait très complexe à mettre en œuvre, car un tel polariseur est généralement monté mobile par rapport au détecteur. Assurer une telle mobilité à l'intérieur d'un cryostat sans pour autant détériorer ses performances de maintien à basse température serait très complexe.

### EXPOSE DE L'INVENTION

Un but de l'invention est de réduire plus efficacement des reflets solaires dans des images produites par un dispositif d'imagerie infrarouge d'une manière plus efficace, sans pour autant augmenter son coût et sa complexité de manière significative.

Il est dès lors proposé un dispositif d'imagerie infrarouge comprenant :
- un cryostat,
- un détecteur infrarouge agencé à l'intérieur du cryostat pour recevoir un signal optique provenant de l'extérieur du dispositif d'imagerie,
- un polariseur linéaire configuré pour polariser le signal optique suivant une direction de polarisation variable, avant que le signal optique n'atteigne le détecteur infrarouge, dans lequel le polariseur linéaire comprend : un premier élément polarisant agencé à l'extérieur du cryostat et mobile en rotation par rapport au cryostat, et un deuxième élément polarisant agencé à l'intérieur du cryostat entre le premier élément polarisant et le détecteur infrarouge, et fixe par rapport au cryostat.

Dans le dispositif proposé, la fonction de polarisation linéaire à direction de polarisation variable est assurée par deux éléments polarisants : le premier élément polarisant et le deuxième élément polarisant.

La mobilité du premier élément polarisant par rapport au deuxième élément polarisant permet de rendre variable la direction de polarisation du polariseur linéaire formé par ces deux éléments polarisants, ce qui permet d'éliminer des reflets solaires dans tout signal optique reçu.

De plus, comme le deuxième élément polarisant est agencé à l'intérieur du cryostat, il est refroidi. Dès lors, des signaux parasites rayonnés par des parties internes du dispositif et réfléchis par le deuxième élément polarisant deviennent « froid » avant d'atteindre le détecteur, comme si le polariseur linéaire avait été agencé dans son entièreté dans le cryostat. En conséquence, le rapport signal sur bruit au niveau du détecteur n'est pas dégradé.

Comme seul le deuxième élément polarisant est agencé à l'intérieur du cryostat, et que ce deuxième élément polarisant n'est pas mobile mais fixe, ce résultat est obtenu moyennant un surcout raisonnable du dispositif. La partie mobile du polariseur linéaire (à savoir le premier élément polarisant) est en effet délocalisée à l'extérieur du cryostat, où son montage n'est pas contraignant puisqu'il ne s'agit pas d'un lieu devant être maintenu à basse température.

Le dispositif d'imagerie selon l'invention peut en outre comprendre les caractéristiques optionnelles suivantes, prises seules ou en combinaison lorsque cela est techniquement possible :
- le premier élément polarisant est une lame demi onde ;
- le premier élément polarisant est mobile en rotation par rapport au cryostat autour d'un axe perpendiculaire à une surface incidente du détecteur infrarouge par laquelle le détecteur infrarouge reçoit le signal optique ;
- le deuxième élément polarisant est à distance du détecteur infrarouge ;
- lequel le deuxième élément polarisant est fixé à une surface incidente du détecteur infrarouge ;
- le deuxième élément polarisant est un polariseur linéaire ayant une direction de polarisation fixe par rapport au cryostat ;
- la direction de polarisation fixe est parallèle à la surface incidente du détecteur infrarouge.
- le détecteur infrarouge est sensible à des longueurs d'ondes appartenant à la bande MWIR.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 illustre de façon schématique dispositif d'imagerie infrarouge selon un premier mode de réalisation ;
- La figure 2 illustre de façon schématique dispositif d'imagerie infrarouge selon un deuxième mode de réalisation ;

Sur l'ensemble des figures, les éléments similaires portent des références identiques.

### DESCRIPTION DETAILLEE DE L'INVENTION

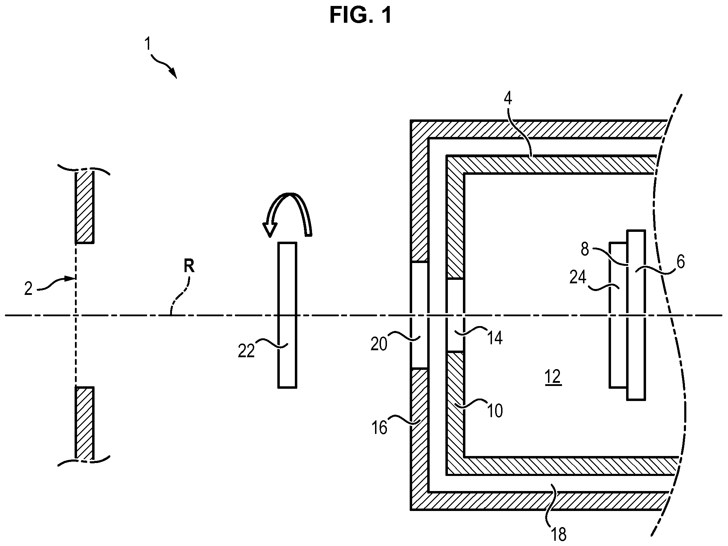

En référence à la **figure 1****,** un dispositif d'imagerie infrarouge 1 comprend une entrée 2, un cryostat 4 et un détecteur infrarouge 6.

L'entrée 2 du dispositif est apte à recevoir un signal optique provenant de l'extérieur du dispositif.

Le détecteur infrarouge 6 est connu en lui-même. Le détecteur 6 est un photodétecteur 6, ayant pour fonction est de convertir le signal optique en un signal électrique qui peut ensuite être exploité pour générer une image.

Le détecteur infrarouge 6 présente notamment une surface incidente 8 par laquelle le détecteur 6 reçoit le signal optique.

Le détecteur infrarouge 6 est sensible à des longueurs d'ondes appartenant à la bande MWIR.

Le cryostat 4 comprend une paroi 10 définissant une chambre 12 destinée à être maintenue à basse température. La paroi 10 est par exemple en métal ou en céramique.

Le détecteur infrarouge 6 est agencé dans cette chambre 12.

Le détecteur infrarouge 6 est fixe par rapport à la paroi 10.

La paroi 10 présente un écran 14, dit écran froid, susceptible d'être traversé par le signal optique en provenance de l'entrée 2, de manière à ce que le signal optique puisse atteindre le détecteur infrarouge 6 agencé dans la chambre définie par le cryostat 4.

Le dispositif d'imagerie infrarouge comprend par ailleurs une deuxième paroi 16 entourant la première paroi 10, les deux parois 10, 16 étants séparées par une espace 18 dans lequel un vide est formé.

La deuxième paroi 16 présente un deuxième écran 20, dit écran chaud ou fenêtre, susceptible d'être traversé par le signal optique.

Les deux écrans 14, 20 sont agencés de sorte à être traversés successivement par un signal optique en provenance de l'entrée 2.

Le dispositif d'imagerie infrarouge 1 comprend par ailleurs un polariseur linéaire.

Le polariseur linéaire est configuré pour polariser suivant une direction de polarisation variable le signal optique provenant de l'entrée 2, avant que le signal optique n'atteigne le détecteur infrarouge 6.

Le polariseur linéaire à direction de polarisation variable comprend deux éléments polarisants : un premier élément polarisant 22, et un deuxième élément polarisant 24.

Dans le présent texte, on définit un élément « polarisant » comme un élément qui est apte à modifier la polarisation d'un signal optique reçu par cet élément.

Le premier élément polarisant 22 est agencé à l'extérieur du cryostat 4.

Le premier élément polarisant 22 est agencé dans l'espace 18 entre l'entrée 2 et l'écran chaud 20. Alternativement, le premier élément polarisant 22 est agencé entre l'écran chaud 20 et l'écran froid 14.

Le premier élément polarisant 22 est mobile en rotation par rapport au cryostat 4 autour d'un axe de rotation R.

L'axe de rotation R est perpendiculaire à la surface incidente 8 du détecteur infrarouge 6.

Le premier élément polarisant 22 est typiquement une lame demi-onde.

De façon connue en elle-même, la lame demi onde présente une surface d'entrée 26 plane et une surface de sortie 28 plane parallèle à la surface d'entrée 2.

L'axe de rotation R de la lame demi onde est perpendiculaire aux surfaces d'entrée 26, et de sortie 28.

Par ailleurs, le deuxième élément polarisant 24 est lui-même un polariseur linéaire. Toutefois, ce polariseur linéaire a une direction de polarisation fixe par rapport au cryostat.

La direction de polarisation fixe définie par le deuxième élément polarisant 24 est parallèle à la surface incidente 8 du détecteur infrarouge 6.

Le deuxième élément polarisant 24 est agencé dans le cryostat 4, c'est-à-dire à l'intérieur de la chambre définie par la paroi.

Le deuxième élément polarisant 24 est agencé entre l'écran froid et le détecteur 6.

Dans le mode de réalisation représenté en figure 1, le deuxième élément polarisant 24 est fixé sur la surface incidente 8 du détecteur infrarouge 6.

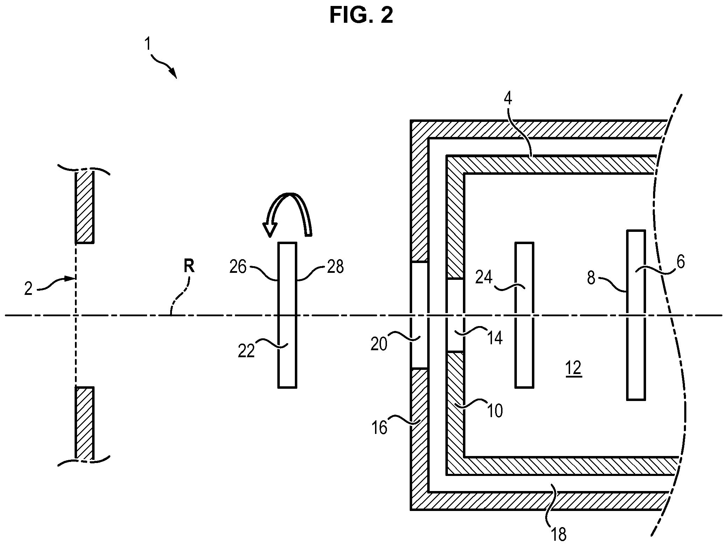

Dans un autre mode de réalisation, représenté en figure 2, le deuxième élément polarisant 24 est à distance du détecteur infrarouge 6. Il peut par exemple être envisagé de fixer ce deuxième élément polarisant 24 sur l'écran froid 14.

Le fonctionnement du dispositif d'imagerie infrarouge 1 est le suivant. Un signal optique pénètre dans le dispositif par son entrée 2. Ce signal optique traverse ensuite le premier élément polarisant 22, puis l'écran chaud 20, puis l'écran froid 14, puis le deuxième élément polarisant 24.

Après avoir traversé les deux éléments de polarisation 22 et 24, le signal optique est polarisé dans une direction de polarisation qui est fonction de la position angulaire du premier élément polarisant 22 autour de l'axe R, par rapport au deuxième élément polarisant 24.

Cette direction de polarisation est parallèle à la surface incidente 8 du détecteur infrarouge 6. Le signal optique ainsi polarisé atteint la surface incidente 8 du détecteur infrarouge 6.

Le détecteur infrarouge 6 convertit le signal optique reçu en un signal électrique qui peut ensuite être exploité pour produire une image d'une scène d'où provient le signal optique.

En faisant tourner le premier élément polarisant 22 autour de son axe de rotation R par rapport au deuxième élément polarisant 24, on peut changer la direction de polarisation du polariseur linéaire formé par les deux éléments de polarisation.

Le polariseur linéaire élimine plus ou moins des reflets solaires présents dans le signal optique, en fonction de la position angulaire du premier élément polarisant 22 par rapport au deuxième élément polarisant 24.

Il existe une position angulaire optimale du premier élément polarisant 22 autour de l'axe de rotation R dans laquelle une composante porteuse de reflets solaires du signal reçu par l'entrée 2 est atténuée au maximum.

Par exemple, il peut être prévu des moyens permettant à un utilisateur du dispositif d'imagerie infrarouge 1 de mettre en rotation manuellement le premier élément polarisant 22 autour de son axe R. De tels moyens sont notamment appropriés lorsque le dispositif d'imagerie infrarouge 1 est portatif, tel qu'une paire de jumelles.

## Revendications

1. Dispositif d'imagerie infrarouge comprenant :
• un cryostat (4),
• un détecteur infrarouge (6) agencé à l'intérieur du cryostat (4) pour recevoir un signal optique provenant de l'extérieur du dispositif d'imagerie,
• un polariseur linéaire configuré pour polariser le signal optique suivant une direction de polarisation variable, avant que le signal optique n'atteigne le détecteur infrarouge (6),
le dispositif étant **caractérisé en ce que** le polariseur linéaire comprend :
• un premier élément polarisant (22) agencé à l'extérieur du cryostat (4) et mobile en rotation par rapport au cryostat (4),
• un deuxième élément polarisant (24) agencé à l'intérieur du cryostat (4) entre le premier élément polarisant (22) et le détecteur infrarouge (6), et fixe par rapport au cryostat (4).

2. Dispositif selon la revendication précédente, dans lequel le premier élément polarisant (22) est une lame demi onde.

3. Dispositif selon l'une des revendications précédentes, dans lequel le premier élément polarisant (22) est mobile en rotation par rapport au cryostat (4) autour d'un axe (R) perpendiculaire à une surface incidente (8) du détecteur infrarouge (6) par laquelle le détecteur infrarouge (6) reçoit le signal optique.

4. Dispositif selon l'une des revendications précédentes, dans lequel le deuxième élément polarisant (24) est à distance du détecteur infrarouge (6).

5. Dispositif selon l'une des revendications 1 à 3, dans lequel le deuxième élément polarisant (24) est fixé à une surface incidente (8) du détecteur infrarouge (6).

6. Dispositif selon l'une des revendications précédentes, dans lequel le deuxième élément polarisant (24) est un polariseur linéaire ayant une direction de polarisation fixe par rapport au cryostat (4).

7. Dispositif selon la revendication précédente, dans lequel la direction de polarisation fixe est parallèle à la surface incidente (8) du détecteur infrarouge (6).

8. Dispositif selon l'une des revendications précédentes, dans lequel le détecteur infrarouge (6) est sensible à des longueurs d'ondes appartenant à la bande MWIR.

## Patentansprüche

1. Infrarot-Bildgebungsvorrichtung, die Folgendes umfasst:
• einen Kryostat (4),
• einen Infrarotdetektor (6), der im Inneren des Kryostats (4) angeordnet ist, zum Empfangen eines optischen Signals, das von außerhalb der Bildgebungsvorrichtung stammt,
• einen Linearpolarisator, der dazu ausgestaltet ist, das optische Signal entlang einer variablen Polarisationsrichtung zu polarisieren, bevor das optische Signal den Infrarotdetektor (6) erreicht,
wobei die Vorrichtung **dadurch gekennzeichnet ist, dass** der Linearpolarisator Folgendes umfasst:
• ein erstes Polarisationselement (22), das außerhalb des Kryostats (4) angeordnet ist und in Bezug auf den Kryostat (4) drehbeweglich ist,
• ein zweites Polarisationselement (24), das im Inneren des Kryostats (4) zwischen dem ersten Polarisationselement (22) und dem Infrarotdetektor (6) angeordnet ist und in Bezug auf den Kryostat (4) fest ist.

2. Vorrichtung nach dem vorhergehenden Anspruch, wobei das erste Polarisationselement (22) ein Halbwellenlängenplättchen ist.

3. Vorrichtung nach einem der vorhergehenden Ansprüche, wobei das erste Polarisationselement (22) in Bezug auf den Kryostat (4) um eine Achse (R) senkrecht zu einer Einfallsoberfläche (8) des Infrarotdetektors (6), über die der Infrarotdetektor (6) das optische Signal empfängt, drehbeweglich ist.

4. Vorrichtung nach einem der vorhergehenden Ansprüche, wobei das zweite Polarisationselement (24) von dem Infrarotdetektor (6) beabstandet ist.

5. Vorrichtung nach einem der Ansprüche 1 bis 3, wobei das zweite Polarisationselement (24) an einer Einfallsoberfläche (8) des Infrarotdetektors (6) befestigt ist.

6. Vorrichtung nach einem der vorhergehenden Ansprüche, wobei das zweite Polarisationselement (24) ein Linearpolarisator ist, der eine in Bezug auf den Kryostat (4) feste Polarisationsrichtung aufweist.

7. Vorrichtung nach dem vorhergehenden Anspruch, wobei die feste Polarisationsrichtung parallel zur Einfallsoberfläche (8) des Infrarotdetektors (6) ist.

8. Vorrichtung nach einem der vorhergehenden Ansprüche, wobei der Infrarotdetektor (6) empfindlich gegenüber Wellenlängen ist, die zum MWIR-Band gehören.

## Claims

1. Infrared imaging device comprising :
• a cryostat (4),
• an infrared detector (6) arranged inside the cryostat (4) to receive an optical signal from outside the imaging device,
• a linear polarizer configured to polarize the optical signal along a variable polarization direction, before the optical signal reaches the infrared detector (6),
the device being **characterized in that** the linear polarizer comprises :
• a first polarizing element (22) arranged outside the cryostat (4) and rotatable relative to the cryostat (4),
• a second polarizing element (24) arranged inside the cryostat (4) between the first polarizing element (22) and the infrared detector (6), and fixed with respect to the cryostat (4).

2. A device according to the preceding claim, wherein the first polarizing element (22) is a half wave plate.

3. A device according to any of the preceding claims, wherein the first polarizing element (22) is rotatable relative to the cryostat (4) about an axis (R) perpendicular to an incident surface (8) of the infrared detector (6) through which the infrared detector (6) receives the optical signal.

4. The device according to any of the preceding claims, wherein the second polarizing element (24) is remote from the infrared detector (6).

5. The device of any of claims 1 to 3, wherein the second polarizing element (24) is attached to an incident surface (8) of the infrared detector (6).

6. A device according to any of the preceding claims, wherein the second polarizing element (24) is a linear polarizer having a fixed direction of polarization with respect to the cryostat (4).

7. The device according to the preceding claim, wherein the fixed polarization direction is parallel to the incident surface (8) of the infrared detector (6).

8. Device according to one of the preceding claims, in which the infrared detector (6) is sensitive to wavelengths in the MWIR band.
